# EUROPÄISCHE PATENTSCHRIFT

(11) **EP 0 676 104 B1**
(45) Veröffentlichungstag und Bekanntmachung des Hinweises auf die Patenterteilung: **02.05.1997**
(21) Anmeldenummer: 94902618.1
(22) Anmeldetag: 20.12.1993
(51) Int. Cl.: H04H 1/02

(54) **MUSIKABSPIELSYSTEM MIT DEZENTRALEN EINHEITEN**
MUSIC PLAYING SYSTEM WITH DECENTRALISED UNITS
SYSTEME D'AUDITION MUSICALE A UNITES DECENTRALISEES

(30) Priorität: 24.12.1992 DE 4244198
(43) Veröffentlichungstag der Anmeldung: 11.10.1995
(73) Patentinhaber: NSM AKTIENGESELLSCHAFT, 55411 Bingen (DE)
(72) Erfinder: NIEDERLEIN, Horst, D-55411 Bingen (DE); HUBER, Anton, D-55424 Münster-Sarmsheim (DE); FRANK, Armin, D-78087 Mönchweiler (DE)
(74) Vertreter: Becker, Bernd, Dipl.-Ing.
(86) Internationale Anmeldenummer: DE9301235
(87) Internationale Veröffentlichungsnummer: WO9415416

(56) Entgegenhaltungen:
- EP-A- 0 082 077
- WO-A-92/22983
- GB-A- 2 178 275
- US-A- 4 232 295
- NTT REVIEW Bd. 4, Nr. 5 , September 1992 , TOKYO JP Seiten 67 - 73 YOSHIDA, MATSUI, ISHIKAWA '7 kHz Stereo Communication System for ISDN'

## Beschreibung

Die Erfindung betrifft ein Musikabspielsystem. Dieses Musikabspielsystem umfaßt eine Anzahl von Musikabspieleinheiten, die jeweils über eine Anzahl von abspielbaren Musikstücken verfügen, ferner einen zentralen Rechner mit einem Speicher, wobei eine Datenfernübertragungsleitung die Musikabspieleinheiten und den zentralen Rechner verbindet.

In der internationalen Patentanmeldung PCT/DE 91/00560 und in der DE-A-4 021 707 ist ein Musikautomatensystem mit einer zentralen Einheit und einer Vielzahl dezentraler Endgeräte offenbart, die mit der zentralen Einheit verbunden sind. Ein zentraler Musikspeicher ist über eine zur Übertragung von Toninformationen geeignete Fernübertragungsleitung mit den Endgeräten verbunden. Die Endgeräte, d.h. die Musikautomaten, enthalten selbst keine Abspieleinheit. Vielmehr wird die gewünschte Information, d.h. die gewählten Musikstücke, vom zentralen Musikspeicher abgerufen. Auf diese Weise können verhältnismäßig preiswerte Wiedergabe-Endgeräte und ein zentraler Musikspeicher mit entsprechend größerer Kapazität verwendet werden. Ein zentraler Rechner speichert Benutzerdaten der einzelnen Musikautomaten und verarbeitet diese.

In der GB-A-2 193 420 ist ein Musikautomat mit einer Münzeinheit, einer Anzeige, einer Eingabetastatur und mindestens einem Lautsprecher beschrieben. Über eine Datenfernübertragungsleitung ist der Musikautomat mit einem zentralen Musikspeicher und Rechner verbunden.

Aus der EP-A-0 140 593 ist ein Musikübertragungssystem bekannt, das eine zentrale Musikabspieleinheit enthält. Mit dieser zentralen Abspieleinheit steht eine Anzahl von Verbrauchern in Verbindung, wobei die über stehende Kabelleitungen oder Sender übertragenen Musikstücke dann in Endgeräten wie z.B. Videogeräten, etc. wiedergegeben werden. Für die zu übertragende Information werden z.B. unbenutzte Videokanäle verwendet. Durch geeignete Demodulation kann aus mehreren gesendeten Musikstücken das jeweils gewünschte Musikstück ausgewählt und angehört werden.

Bei einem Datengewinnungs- und -übertragungssystem gemäß der US-A-4 232 295 ist eine Anzahl von entfernt aufgestellten Musikautomaten über Telefonleitungen miteinander verbunden. Mit jedem Musikautomaten ist ein Datensammler verbunden, der die Abspielhäufigkeit bestimmter Musikstücke erfaßt. Diese erfaßten Daten werden an einen zentralen Rechner übermittelt, der die Daten auswertet und weiterverarbeitet.

Bei einem Fernsehsystem gemäß der US-A-4 471 379 werden Fernsehsignale mit einer Anzahl von invertierten Videobildern kodiert übertragen und im Fernsehempfänger nach Maßgabe der jeweils vorhandenen Benutzerkennzahl dekodiert, so daß jeder Benutzer lediglich das von ihm gewählte und gebuchte Fernsehprogramm empfangen kann.

Bei einem in der WO 90/15497 vorgeschlagenen Verfahren zur Übertragung von Information von einer Zentraleinheit mit zentralem Speicher zu verschiedenen Abnehmern bzw. Benutzern wird die jeweils benötigte Information von dem zentralen Speicher abgerufen und zu dem jeweiligen Benutzer übertragen.

Aus der GB-A-2 185 361 ist ein Terminal für den privaten Gebrauch bekannt, das für eingehende Daten eine Kodiereinrichtung und einen Speicher aufweist. Für die Datenabfrage und Anzeige sind eine Bedieneinheit sowie ein Fernsehgerät und Hifi-Gerät vorgesehen.

Bei einem in der DE-A-3 207 022 beschriebenen Informationsabrufsystem für schmalbandige und breitbandige Informationen kann die Breitband-Informationsabrufzentrale als audiovisuelle Informationsbank mit entsprechender Steuerung ausgebildet sein, aus der die Breitbandinformation abgerufen wird. Als Datenfernübertragungsleitung wird ein digitales Fernsprechnetz oder ein ISDN-Netz verwendet. Bei Verwendung eines solchen ISDN-Netzes können hohe Übertragungsgeschwindigkeiten erzielt werden. Die hierbei verwendeten Datenreduktionsverfahren (1-Bit-Reduktionsverfahren) ermöglichen es, Musik mit hoher Tonqualität zu übertragen.

Der Erfindung liegt die Aufgabe zugrunde, ein Musikabspielsystem zu schaffen, das wenig aufwendig ist und kostengünstige Einheiten hat.

Diese Aufgabe ist bei einem Musikabspielsystem mit den Merkmalen des Anspruchs 1 gelöst. Vorteilhafte Weiterbildungen des erfindungsgemäßen Musikabspielsystems sind Gegenstand der abhängigen Ansprüche.

Ein erfindungsgemäßes Musikabspielsystem umfaßt somit eine Anzahl von Musikabspieleinheiten, wobei die Musikabspielein-heiten jeweils über eine Anzahl von abspielbaren Musikstükken verfügen. Es ist mindestens eine Eingabe vorgesehen, mittels der auf einer Musikabspieleinheit abzuspielende Musikstücke ausgewählt werden. Ferner ist ein zentraler Rechner mit einem Speicher in mindestens einer Musikabspieleinheit vorgesehen, wobei mindestens eine Abspieleinheit einen Speicher aufweist und wobei die Daten der in den Musikabspieleinheiten verfügbaren Musikstücke jeweils in dem Speicher des zentralen Rechners gespeichert sind. Die Musikabspieleinheiten sind über eine Datenfernübertragungsleitung miteinander und mit dem zentralen Rechner verbunden.

Es ist somit kein zentraler Speicher für abspielbare Musikstücke vorgesehen, sondern vielmehr ist der zentrale Musikspeicher auf eine bestimmte Anzahl von Musikabspielein-heiten verteilt. Diese Musikabspieleinheiten sind herkömmlich aufgebaut, d.h. sie weisen z.B. eine Musikbox mit Wechsler auf. Die Boxen bilden somit den Gesamtspeicher. Es ist so ein dezentrales System entstanden, das es ermöglicht,

Musikstücke nach bestimmten Vorgaben, z.B. für bestimmte Hörerkreise zusammengestellt, jeweils in einzelnen Musikabspieleinheiten zu speichern. Wenn eine solche Musikabspieleinheit bereits in einer Gaststätte steht, ist es nicht erforderlich, für den Abruf dieser Musikstücke Datenübertragungsgebühren zu bezahlen.

Gemäß einer vorteilhaften Weitergestaltung des erfindungsgemäßen Musikabspielsystems weist dieses eine Anzahl von mit den Musikabspieleinheiten verbundenen Endgeräten mit Zwischenspeicher auf, wobei die Endgeräte mit einer Eingabeeinheit versehen sind. Bei dem Zwischenspeicher kann es sich z.B. um eine Diskette, Festplatte, etc. handeln. Es kann so von jeder Musikabspieleinheit zu einer anderen ein Musikstück angefordert werden. Bei Anforderung von einem Endgerät aus, das mit dem zentralen Rechner verbunden sein kann, ist nicht bekannt, wo das betreffende Musikstück gespeichert ist. Dieses kann sich in einem der Musikabspieleinheiten oder einem eventuellen weiteren Speicher befinden.

Sind die Endgeräte gemäß einem bevorzugten Ausführungsbeispiel der Erfindung miteinander verbunden, so ist es auch möglich, von einem Endgerät ein Musikstück anzufordern, das z.B. bei einem anderen Endgerät auf einer Festplatte gespeichert ist.

Der zentrale Rechner führt lediglich zentrale Verwaltungsaufgaben durch, während die Musikdatenbank in die Musikabspieleinheiten, d.h. die Musikboxen, ausgelagert ist. Auf diese Weise ist kein zentraler Speicher erforderlich, in dem sämtliche Musikstücke gespeichert sind, sondern es können bei gezielter Aufstellung der Abspieleinheiten Übertragungsgebühren gespart werden. Hierzu dienen auch bei den Endgeräten vorgesehene Zwischenspeicher.

Der zentrale Rechner kann vorteilhaft Benutzerdaten der einzelnen Musikautomaten speichern und/oder abarbeiten, wobei an den Musikautomaten und/oder an den Endgeräten jeweils eine Code-Bedieneinheit und/oder Geldbedieneinheit vorgesehen ist, die den Zugriff zum zentralen Rechner und den entsprechenden Benutzerdaten freigibt. Der zentrale Rechner kann somit auch Statistiken betreffend die Benutzungshäufigkeit, Zugriffswege, etc. durchführen.

Gemäß einem vorteilhaften Ausführungsbeispiel des erfindungsgemäßen Musikabspielsystems ist als Datenfernübertragungsleitung eine bidirektionale ISDN-Leitung vorgesehen. Zu diesem Zweck sind die Musikabspieleinheiten abgesehen von einer Kodiereinheit auch mit einer ISDN-Karte versehen. Über die ISDN-Leitung, die entsprechend der Informationsrichtung gelegt wird, können Daten übertragen werden und auch Statistikdaten sowie komprimierte Daten angefordert werden. Des weiteren ist eine Datenübertragung von und zu Endgeräten bzw. zwischen diesen möglich. Selbst-verständlich werden die Endgeräte und die Musikabspielein-heiten so aufgestellt, daß sich günstige Übertragungstarife ergeben.

Vorteilhaft ist der zentrale Rechner ein Personalcomputer. Dieser kann dann im Verwaltungsbüro aufgestellt sein und die Daten sämtlicher Musikstücke in den Musikabspieleinheiten enthalten. Selbstverständlich werden entsprechende Schnittstellen und Karten vorgesehen.

Bei der Durchführung einer Musikübertragung kann diese von einem Wechsler in Echtzeit z.B. von einer Platte abgespielt werden. Diese wird dann komprimiert und zum direkten Anhören übertragen. Es kann auch eine Zwischenspeicherung im Endgerät erfolgen. Ferner kann das betreffende Musikstück von einem Zwischenspeicher der Musikdatenbank direkt vom Endgerät zur Direktübertragung übermittelt werden. Es kann auch von einem Zwischenspeicher der Musikdatenbank zu einem Zwischenspeicher am Endgerät übertragen werden. Aufgrund der bidirektionalen ISDN-Leitung können auch wieder Daten vom Zwischenspeicher eines Endgerätes zu einem anderen Endgerät direkt oder zu dessen Zwischenspeicher übertragen werden. Die Musikabspieleinheiten sind dann zweckmäßig mit einer Abspielwechseleinrichtung und einer Kodiereinheit versehen.

Des weiteren sind bei einer vorteilhaften Weiterbildung der Erfindung mehrere jeweils eine Musikabspieleinheit, einen zentralen Rechner, eine Kodiereinheit und eine Dekodiereinheit umfassende Musikzentralen über Datenfernübertragungsleitungen verbunden und über Datenfernübertragungsleitungen an mehrere, jeweils einen Personalcomputer und eine Dekodiereinrichtung enthaltende Endgeräte angeschlossen. Dadurch ist ein optimaler Datenaustausch zwischen den Musikzentralen und den Endgeräten, die keine Musikabspieleinheit enthalten, gewährleistet. Zweckmäßigerweise arbeitet hierbei eine Musikzentrale als Haupteinheit. Zur Vereinfachung der Dateneingabe sind die Musikzentralen jeweils mit einem Scanner verbunden. Dies ermöglicht es, beispielsweise die auf einer Plattenhülle enthaltenen Informationen (Bilder und Texte) durch Abscannen in das System einzugeben.

Die Erfindung wird im folgenden weiter anhand zweier Ausführungsbeispiele und der Zeichnung beschrieben. In der Zeichnung zeigen:
- Fig. 1: ein schematisches Blockdiagramm eines Musikabspielsystems und
- Fig. 2: eine schematische Darstellung eines Musikautomatenendgerätes und
- Fig. 3: ein schematisches Blockdiagramm eines alternativen Musikabspielsystems.

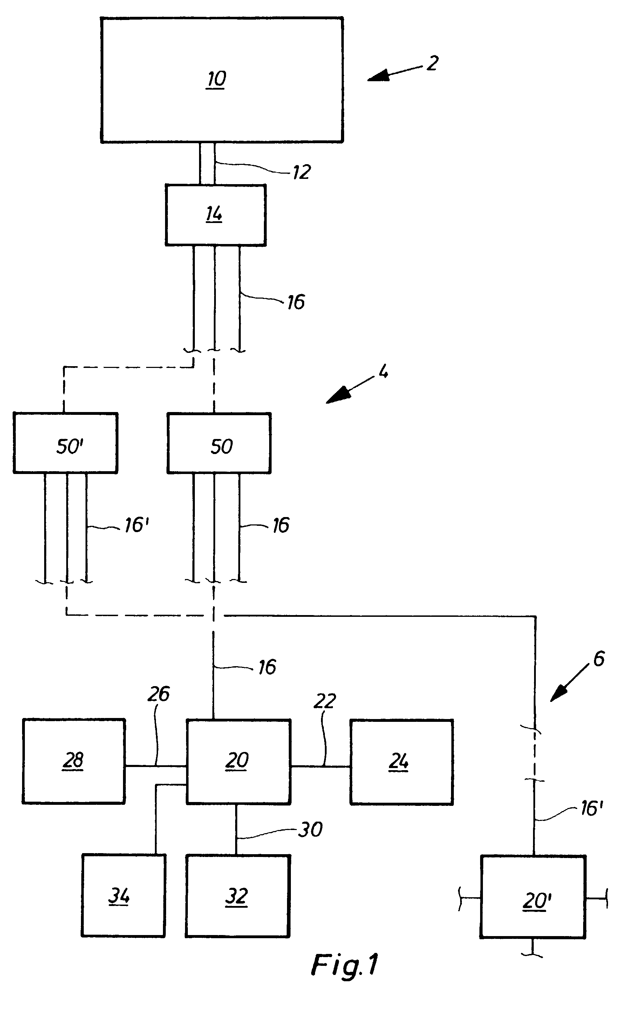

Bei dem in Fig. 1 schematisch veranschaulichten Musikabspielsystem ist eine zentrale Einheit 2 und eine Anzahl von Musikabspieleinheiten 4 sowie eine weitere Anzahl von mit den Musikabspieleinheiten 4 verbundenen Endgeräten 6 vorgesehen.

Die zentrale Einheit 2 umfaßt einen Rechner 10, bei dem es sich z.B. um einen Personalcomputer handeln kann. Mit der zentralen Einheit 2 ist eine Eingabe/Ausgabeeinheit 14 verbunden, an die eine Vielzahl von Datenfernübertragungsleitungen 16 angeschlossen ist, bei denen es sich um ISDN-Leitungen handelt.

Die Datenfernübertragungsleitungen 16 sind jeweils mit einer Musikabspieleinheit 50, 50', etc. verbunden, die vor Ort einen herkömmlichen Musikautomaten ersetzen soll. Eine Musikabspieleinheit ist jeweils mit einer Abspielwechseleinrichtung, Kodiereinheit und ISDN-Karte versehen und verfügt jeweils über eine Anzahl von abspielbaren Musikstücken.

An eine Musikabspieleinheit 50 ist jeweils eine Vielzahl von Datenfernübertragungsleitungen 16, 16', etc. angeschlossen, bei denen es sich wiederum um ISDN-Leitungen handelt. Die Datenfernübertragungsleitungen 16 sind jeweils mit einer Eingabe/Ausgabeeinheit 20 eines Endgerätes 6 verbunden, das vor Ort zur Musikwiedergabe dient. Die Eingabe/Ausgabeeinheit 20 ist über eine Leitung 22 mit einer Bildschirmeinheit 24 verbunden, die die Anzeige des Endgerätes darstellt. Auf der Bildschirmeinheit 24 werden z.B. die mittels des Musikautomaten abspielbaren Musikstücke angezeigt, wobei z.B. die Musikstücke, Interpreten, Hitliste und dergleichen sortiert sein können. Des weiteren ist die Eingabe/Ausgabeeinheit 20 über eine Leitung 26 mit einer Eingabetastatur 28 verbunden. Die über die Eingabetastatur 28 eingegebenen Auswahlbefehle werden auf der Bildschirmeinheit 24 angezeigt und das jeweils ausgewählte Musikstück sichtbar gemacht bzw. gekennzeichnet. Zur endgültigen Auswahl kann die Eingabetastatur 28 eine Bestätigungstaste umfassen. Mit der Eingabe/Ausgabeeinheit ist ferner über eine weitere Leitung 30 ein Lautsprechersystem 32 verbunden. Im übrigen kann die Eingabetastatur auch durch ein Touch-Screen-System ersetzt werden.

Das Endgerät 6 kann soweit ausgestaltet sein, daß es lediglich die zur Auswahl von Musikstücken erforderlichen Eingabe/Ausgabeeinheiten und die notwendigen Wiedergabeeinheiten wie das Lautsprechersystem 32 enthält. Die übrigen Einheiten können Teil der Musikabspieleinheit 50 bzw. der zentralen Einheit 2 sein, die je nach Auslegung des Musikabspielsystems die Verarbeitung der Benutzerdaten durchführen kann. Hierzu dient ein in der zentralen Einheit 2 vorgesehener zentraler Rechner. Zur Sicherung der im zentralen Rechner 10 gespeicherten und mit diesem verarbeiteten Daten ist dann im externen Endgerät eine Code-Bedieneinheit vorgesehen, die ebenfalls soweit reduziert sein kann, daß ein Kennwort (Password) gespeichert ist, mit dessen Eingabe der Zugriff zum Rechner und den Benutzerdaten freigegeben wird. Hierdurch kann der Geräteaufsteller Abrechnungen und Auswertungen zentral gesteuert durchführen. Auch ist die Überwachung und Abgabe der GEMA-Gebühren bei einem derartigen zentralisierten System vereinfacht.

Im dargestellten Ausführungsbeispiel nach Fig. 1 des Musikabspielsystems sind die Endgeräte 6 jeweils mit den Musikabspieleinheiten 4 verbunden. Alternativ können sie auch direkt mit der zentralen Einheit 2 oder miteinander verbunden sein.

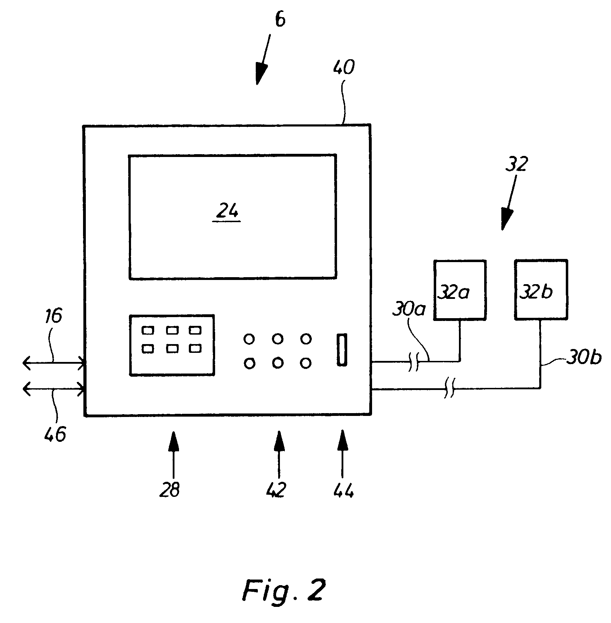

Der Aufbau eines Endgerätes ist in Fig. 2 schematisch dargestellt. Dieser Musikautomat umfaßt ein Gehäuse 40, das mit einer Bildschirmeinheit 24 und einer Eingabetastatur 28 versehen ist. Des weiteren sind Bedienknöpfe und tastaturen 42 vorgesehen, mit denen die Bildschirmanzeige und die Lautsprecher 32a, 32b des Lautsprechersystems 32 eingestellt werden können. Sie umfassen auch einen Ein/Ausschalter. Des weiteren ist auf der Vorderseite des Gehäuses 40 ein Schlitz 44 vorgesehen, der zur Aufnahme von magnetisch kodierten Karten anstelle von oder zusätzlich zu einer herkömmlichen Münzeinheit vorgesehen ist. Das Gehäuse 40 weist einen Anschluß für eine Datenfernübertragungsleitung 16 auf. Des weiteren ist ein Anschluß für ein Netzkabel 46 vorgesehen.

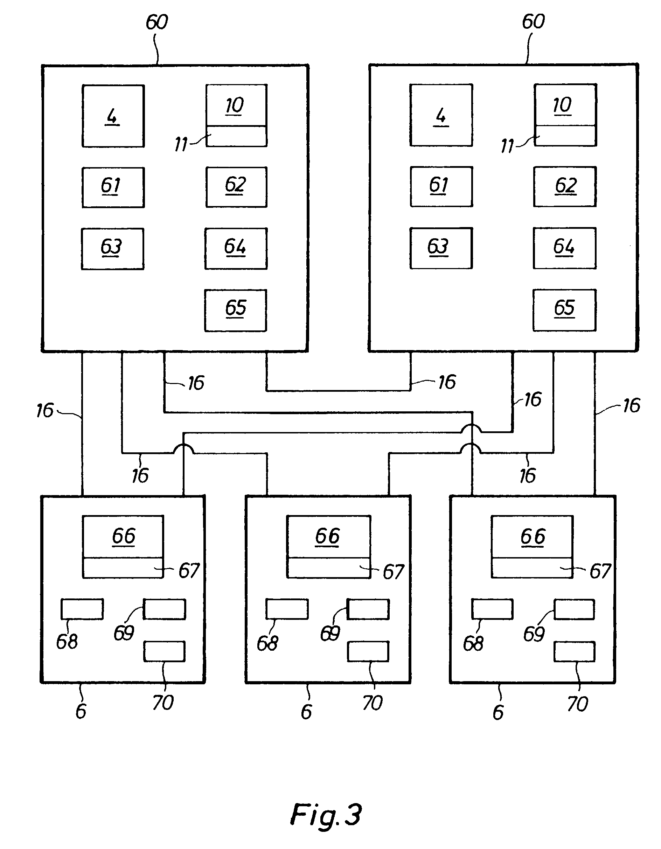

Bei dem in Fig. 3 gezeigten Musikabspielsystem sind über Datenfernübertragungsleitungen 16 zwei Musikzentralen 60 untereinander und mit drei Endgeräten 6 verbunden. Selbstverständlich kann die Zahl der Musikzentralen 60 und die Zahl der Endgeräte 6 beliebig vergrößert werden. Jede Musikzentrale 60 umfaßt eine Musikabspieleinheit 4, einen zentralen Rechner 10 mit einem zugeordneten Festplattenspeicher 11, eine Kodiereinheit 61, eine Dekodiereinheit 62, eine ISDN-Karte 63, einen Verstärker 64 und einen Scanner 65. Mittels des Scanners 65 können beliebige Informationen, insbesondere die Bilder auf den Plattenhüllen in die Musikzentrale 60 eingegeben werden. Zur vereinfachten und sicheren Datenübertragung ist eine der Musikzentralen 60 als Haupteinheit ausgelegt. Die einzelnen Endgeräte 6 enthalten jeweils einen Personalcomputer 66 mit zugeordnetem Festplattenspeicher 67, eine Dekodiereinrichtung 68, eine ISDN-Karte 69 und einen Verstärker 70. Sowohl dem Rechner 10 der Musikzentrale als auch dem Personalcomputer 66 des Endgerätes 6 ist jeweils eine Bildschirmanzeige und ein Bedienerterminal zugeordnet. Das Musikabspielsystem stellt also einen optimalen Datenaustausch zwischen den Musikzentralen 60 und den Endgeräten 6 sicher.

## Patentansprüche

1. Musikabspielsystem, umfassend
- eine Anzahl von Musikabspieleinheiten (4; 50),
- einen zentralen Rechner (2; 10) mit einem Speicher,
- mindestens eine Eingabeeinheit (28), mittels der auf einer Musikabspieleinheit (4; 50) abzuspielende Musikstükke ausgewählt werden,
- wobei die Musikabspieleinheiten (4; 50) über eine Datenfernübertragungsleitung mit dem zentralen Rechner (16) verbunden sind,
dadurch **gekennzeichnet,** daß
- in mindestens einer Musikabspieleinheit (4; 50) ein Speicher des zentralen Rechners (2, 10) vorgesehen ist und die Musikabspieleinheiten (4; 50) über die Datenfernübertragungsleitung (16) miteinander verbunden sind,
- wobei die Musikabspieleinheiten (4; 50) jeweils über eine Anzahl von abspielbaren Musikstücken verfügen,
- wobei die Daten der in den Musikabspieleinheiten (4; 50) verfügbaren Musikstücke jeweils in dem Speicher des zentralen Rechners (2; 10) gespeichert sind.

2. Musikabspielsystem nach Anspruch 1, **gekennzeichnet** durch eine Anzahl von mit den Musikabspieleinheiten verbundenen Endgeräten (6) mit Zwischenspeicher (34), wobei die Endgeräte mit einer Eingabeeinheit (28) versehen sind.

3. Musikabspielsystem nach Anspruch 2, dadurch **gekennzeichnet,** daß die Endgeräte mit dem zentralen Rechner verbunden sind.

4. Musikabspielsystem nach Anspruch 1 oder 3, dadurch **gekennzeichnet,** daß die Endgeräte miteinander verbunden sind.

5. Musikabspielsystem nach einem der Ansprüche 1 bis 4, dadurch **gekennzeichnet,** daß der zentrale Rechner (2; 10) Benutzerdaten der einzelnen Musikabspieleinheiten speichert und/oder verarbeitet, wobei an den Musikabspieleinheiten und/oder an den Endgeräten jeweils eine Code-Bedieneinheit und/oder Geldbedieneinheit vorgesehen ist, die den Zugriff zum zentralen Rechner und den entsprechenden Benutzerdaten freigibt.

6. Musikabspielsystem nach einem der Ansprüche 1 bis 5, dadurch **gekennzeichnet,** daß als Datenfernübertragungsleitung (16) eine bidirektionale ISDN-Leitung vorgesehen ist und die Musikabspieleinheiten (4; 50) mit einer ISDN-Karte versehen sind.

7. Musikabspielsystem nach einem der Ansprüche 1 bis 6, dadurch **gekennzeichnet,** daß der zentrale Rechner (2; 10) ein Personalcomputer ist.

8. Musikabspielsystem nach einem der Ansprüche 1 bis 7, dadurch **gekennzeichnet,** daß die Musikabspieleinheiten (4) mit einer Abspielwechseleinrichtung und einer Kodiereinheit versehen sind.

9. Musikabspielsystem nach einem der Ansprüche 1 bis 8, dadurch **gekennzeichnet,** daß mehrere, jeweils eine Musikabspieleinheit (4), einen zentralen Rechner (10), eine Kodiereinheit (61) und eine Dekodiereinheit (62) umfassende Musikzentralen (60) über Datenfernübertragungsleitungen (16) verbunden und über Datenfernübertragungsleitungen (16) an mehrere, jeweils einen Personalcomputer (66) und eine Dekodiereinrichtung (68) enthaltende Endgeräte (6) angeschlossen sind.

10. Musikabspielsystem nach Anspruch 9, dadurch **gekennzeichnet,** daß eine Musikzentrale (60) als Haupteinheit arbeitet.

11. Musikabspielsystem nach Anspruch 9 oder 10, dadurch **gekennzeichnet,** daß die Musikzentralen (60) jeweils mit einem Scanner (65) verbunden sind.

## Claims

1. Music playing system, comprising
- a number of music playing units (4; 50),
- a central computer (2; 10) having a memory,
- at least one input unit (28), by means of which pieces of music, which are to be played on a music playing unit (4; 50), are selected,
- the music playing units (4; 50) being connected to the central computer (10) via a remote data transmission line (16),
characterised in that
- a memory of the central computer (2, 10) is provided in at least one music playing unit (4; 50), and the music playing units (4; 50) are interconnected via the remote data transmission line (16),
- the music playing units (4; 50) each having a number of playable pieces of music, and
- the data for the pieces of music, which are available in the music playing units (4; 50), being respectively stored in the memory of the central computer (2; 10).

2. Music playing system according to claim 1, characterised by a number of terminal devices (6), which are connected to the music playing units, together with an intermediate memory (34), the terminal devices being provided with an input unit (28).

3. Music playing system according to claim 2, characterised in that the terminal devices are connected to the central computer.

4. Music playing system according to claim 1 or 3, characterised in that the terminal devices are interconnected.

5. Music playing system according to one of claims 1 to 4, characterised in that the central computer (2; 10) stores and/or processes user data of the individual music playing units, a code-operated unit and/or money-operated unit being provided on the music playing units and/or on the terminal devices, which money- and/or coin-operated unit gives access to the central computer and the appropriate user data.

6. Music playing system according to one of claims 1 to 5, characterised in that a bi-directional ISDN line is provided as the remote data transmission line (16), and the music playing units (4; 50) are provided with an ISDN card.

7. Music playing system according to one of claims 1 to 6, characterised in that the central computer (2; 10) is a personal computer.

8. Music playing system according to one of claims 1 to 7, characterised in that the music playing units (4) are provided with an alternating playing means and an encoding unit.

9. Music playing system according to one of claims 1 to 8, characterised in that a plurality of music centres (60), each comprising a music playing unit (4), a central computer (10), an encoding unit (61) and a decoding unit (62), are connected via remote data transmission lines (16) and communicate with a plurality of terminal devices (6), which each contain a personal computer (66) and a decoding means (68), via remote data transmission lines (16).

10. Music playing system according to claim 9, characterised in that a music centre (60) operates as a main unit.

11. Music playing system according to claim 9 or 10, characterised in that the music centres (60) are each connected to a scanner (65).

## Revendications

1. Système de lecture de musique comportant
- un nombre d'unités de lecture de musique (4 ; 50),
- un ordinateur central (2 ; 10) avec une mémoire,
- au moins une unité de saisie (28), au moyen de laquelle sont sélectionnés des morceaux de musique à lire sur une unité de lecture de musique (4 ; 50),
- les unités de lecture de musique (4 ; 50) étant reliées à l'ordinateur central (16) par une ligne de télétransmission de données,
caractérisé en ce que
- dans au moins une unité de lecture de musique (4 ; 50) est prévue une mémoire de l'ordinateur central (2, 10) et les unités de lecture de musique (4 ; 50) sont reliées entre elles par la ligne de télétransmission de données (16),
- les unités de lecture de musique (4 ; 50) disposant chacune d'un nombre de morceaux de musique à lire,
- les données des morceaux de musique disponibles dans les unités de lecture de musique (4 ; 50) étant mémorisées chacune dans la mémoire de l'ordinateur central (2 ; 6).

2. Système de lecture de musique selon la revendication 1, caractérisé par un nombre de terminaux (6) avec mémoire intermédiaire (34) reliés aux unités de lecture de musique, les terminaux étant pourvus d'une unité de saisie (28).

3. Système de lecture de musique selon la revendication 2, caractérisé en ce que les terminaux sont reliés à l'ordinateur central.

4. Système de lecture de musique selon la revendication 1 ou 3, caractérisé en ce que les terminaux sont reliés entre eux.

5. Système de lecture de musique selon l'une des revendications 1 à 4, caractérisé en ce que l'ordinateur central (2 ; 10) mémorise des données d'utilisateur des différentes unités de lecture de musique et/ou les traite, aux unités de lecture de musique et/ou aux terminaux étant prévue pour chacun une unité de commande à code et/ou une unité de commande à monnaie, qui libère l'accès à l'ordinateur central et aux données d'utilisateur correspondantes.

6. Système de lecture de musique selon l'une des revendications 1 à 5, caractérisé en ce qu'il est prévu comme ligne de télétransmission de données (16) une ligne RNIS bidirectionnelle et les unités de lecture de musique (4 ; 50) sont pourvues d'une carte RNIS.

7. Système de lecture de musique selon l'une des revendications 1 à 6, caractérisé en ce que l'ordinateur central (2 ; 10) est un ordinateur individuel.

8. Système de lecture de musique selon l'une des revendication 1 à 7, caractérisé en ce que les unités de lecture de musique (4) sont pourvues d'un dispositif de changement de lecture et d'une unité de codage.

9. Système de lecture de musique selon l'une des revendications 1 à 8, caractérisé en ce que plusieurs centrales de musique (60) comportant chacune une unité de lecture de musique (4), un ordinateur central (10), une unité de codage (61) et une unité de décodage (62) sont reliées par des lignes de télétransmission de données (16) et sont raccordées, par des lignes de télétransmission de données (16) à plusieurs terminaux (6) contenant chacun un ordinateur individuel (66) et un dispositif de décodage (68).

10. Système de lecture de musique selon la revendication 9, caractérisé en ce qu'une centrale de musique (60) fonctionne en tant qu'unité principale.

11. Système de lecture de musique selon la revendication 9 ou 10, caractérisé en ce que les centrales de musique (60) sont reliées chacune à un scanner (65).
